# EUROPEAN PATENT SPECIFICATION

(11) **EP 1 627 171 B1**
(45) Date of publication and mention of the grant of the patent: **08.08.2007**
(21) Application number: 04734450.2
(22) Date of filing: 21.05.2004
(51) Int. Cl.: F16L 21/02

(54) **RUBBER STRIP FOR PARTIAL EMBEDDING INTO A CONCRETE PIPE, CONCRETE PIPE WITH PARTIALLY EMBEDDED RUBBER STRIP**
GUMMILEISTE ZUR TEILWEISEN EINBETTUNG IN EIN BETONROHR, BETONROHR MIT TEILWEISE EINGEBETTETER GUMMILEISTE
BANDE EN CAOUTCHOUC DESTINEE A ETRE PARTIELLEMENT INCORPOREE DANS UNE CONDUITE EN BETON, CONDUITE EN BETON COMPRENANT LA BANDE EN CAOUTCHOUC PARTIELLEMENT INCORPOREE

(30) Priority: 28.05.2003 SE 0301562
(43) Date of publication of application: 22.02.2006
(73) Proprietor: Trelleborg Forsheda Building AB, 331 29 Värnamo (SE)
(72) Inventor: CAVKA, Elvir, S-331 41 Värnamo (SE)
(74) Representative: Hjalmarsson, Magnus Axel
(86) International application number: PCT/SE2004/000787
(87) International publication number: WO 2004/106798

(56) References cited:
- DE-A1- 3 414 180
- DE-U1- 20 216 186

## Description

### Field of the Invention

The present invention relates to a rubber strip, which, in manufacture of a concrete pipe provided with an end face, is adapted to be partially embedded in the concrete pipe and has a first portion which is adapted to be embedded in the concrete pipe and a second portion which is adapted to project essentially axially from the end face of the concrete pipe.

The invention also relates to a concrete pipe, which has an end face and is arranged to be assembled with another concrete pipe provided with an end face, end face to end face with an intermediate load-distributing means, which consists of at least one load-distributing strip which has a first portion embedded in the concrete pipe, and a second portion projecting essentially axially from the end face of the concrete pipe.

Finally the invention relates to a bottom ring for a mould for casting a concrete pipe, which bottom ring is adapted to form an end face of the concrete pipe.

### Background Art

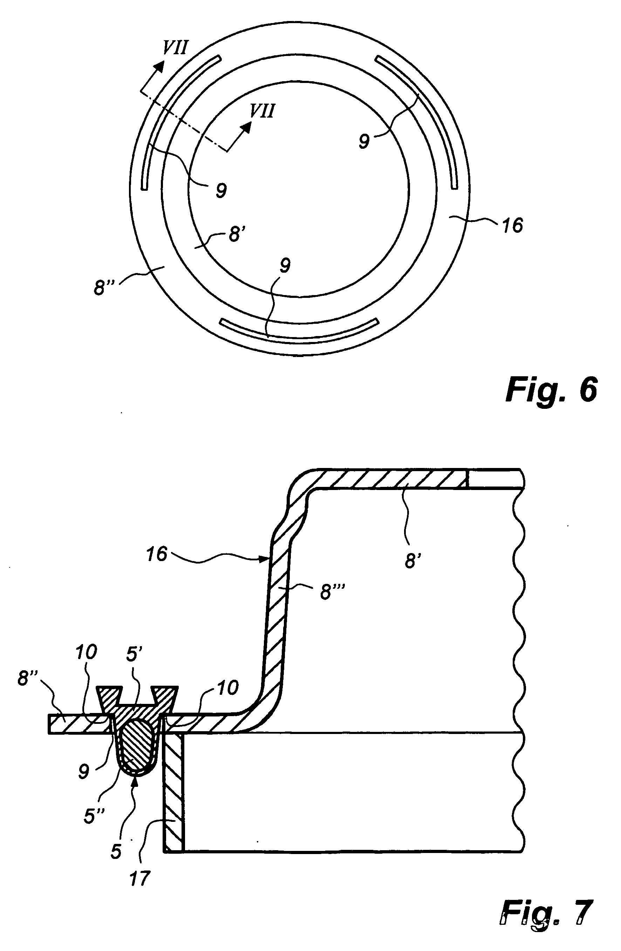

DE 202 16 186 U1 shows in Fig. 6 a concrete pipe of the type mentioned above, which is provided with a load-distributing means, which consists of a plurality of strips with a first portion embedded in the concrete pipe, and a second portion projecting from the end face of the concrete pipe. The same document shows in Fig. 7 a bottom ring included in a mould for casting a concrete pipe and having for each strip a recess for holding the associated strip. Each strip is held in its recess in such a manner that said second portion thereof is placed in the recess, while said first portion thereof is located above the bottom surface of the bottom ring.

The strip according to DE 202 16 186 U1, which serves as a load-distributing strip, consists of a plastic tube filled with sand. Such a plastic tube filled with sand is fairly complicated to manufacture, among other things since its two ends must be sealed to prevent the sand from flowing out. A concrete pipe provided with such sand-filled plastic tubes must be handled carefully so as not to damage the tubes. If a tube is damaged, the sand can also flow out, in which case the tube's capability of serving as a load distributor is considerably reduced.

### Summary of the Invention

An object of the present invention therefore is to provide a rubber strip to be used as a load-distributing strip, which is easier to manufacture and is less susceptible to damage than the sand-filled plastic tube described above.

According to the invention, this object is achieved by a rubber strip, which is of the type stated by way of introduction and characterised in that the first portion is made of a vulcanised rubber material, and that the second portion is made of an unvulcanised rubber material, which is externally enclosed by a layer of vulcanised rubber material.

The vulcanised rubber material of said first portion and the vulcanised rubber material of said layer are preferably the same rubber material, which suitably has a hardness of 35-70 IRHD.

In a preferred embodiment, the rubber strip has in its second portion a cross-section tapering away from the first portion.

Another object of the present invention is to provide a concrete pipe which is provided with partially embedded load-distributing means and which does not require handling with such great care as does the concrete pipe according to DE 202 16 186 U1.

According to the present invention, this object is achieved by a concrete pipe, which is of the type stated by way of introduction and characterised in that the first portion, embedded in the concrete pipe, of the load-distributing strip is made of a vulcanised rubber material, and that its second portion projecting from the end face of the concrete pipe is made of an unvulcanised rubber material, which is externally enclosed by a layer of vulcanised rubber material.

The vulcanised rubber material of said first portion and the vulcanised material of said layer are preferably the same rubber material, which suitably has a hardness of 35-70 IRHD.

In a preferred embodiment, the load-distributing means consists of a plurality of load-distributing strips distributed in the circumferential direction of the concrete pipe.

### Brief Description of the Drawings

The invention will now be described in more detail with reference to the accompanying drawings.

Fig. 1 is a vertical sectional view and shows a portion of a concrete pipe according to the invention provided with a partially embedded rubber strip according to the invention.

Fig. 2 is a top plan view and shows a bottom ring intended for a mould for casting the concrete pipe according to Fig. 1.

Fig. 3 is an enlarged sectional view taken along line III-III in Fig. 2 and shows the bottom ring with a rubber strip according to the invention arranged therein.

Fig. 4 is a top plan view and shows an alternative bottom ring.

Fig. 5 corresponds to Fig. 1 but shows the concrete pipe with the rubber strip embedded in a different position.

Fig. 6 corresponds to Fig. 2 but shows a bottom ring intended for a mould for casting the concrete pipe according to Fig. 5.

Fig. 7 is an enlarged sectional view taken along line VII-VII in Fig. 6 and shows the bottom ring with a rubber strip arranged therein.

### Description of Preferred Embodiments

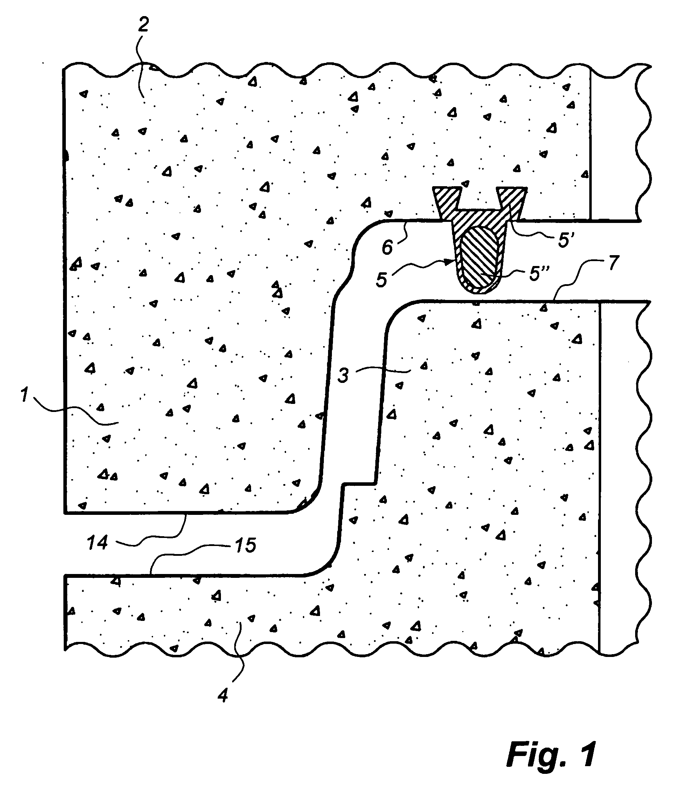

Fig. 1 shows an end portion of a concrete pipe 2 according to the invention provided with a socket end 1 and an opposite end portion of a concrete pipe 4 provided with a spigot end 3. The two concrete pipes 2 and 4 are to be assembled end face to end face with an intermediate load-distributing means, which here consists of three circular-arc-shaped rubber strips 5 according to the invention. The three circular-arc-shaped load-distributing strips 5 are partially embedded in the concrete pipe 2 and are uniformly distributed in the circumferential direction thereof. Each of the strips 5 has in the example shown an extent of about 60°.

Each strip 5 has a first portion 5' embedded in the concrete pipe 2 and a second portion 5" projecting essentially axially from the radially inner end face 6 of the concrete pipe 2. The first portion 5' is made of a vulcanised rubber material with a hardness of 35-70 IRHD. The second portion 5", which has a cross-section tapering away from the first portion 5', consists of a softer core of unvulcanised rubber material, which is externally enclosed by a layer of vulcanised rubber material. The strip 5 is advantageously manufactured by co-extrusion of a rubber mixture, to which a vulcanising agent is added, and the same rubber mixture without a vulcanising agent, and subsequent vulcanisation of the rubber mixture provided with the vulcanising agent. In the strip 5 manufactured in this manner, the vulcanised rubber material of the first portion 5' and the vulcanised rubber material of the outer layer of the second portion 5" are thus the same rubber material.

When the concrete pipes 2 and 4 are assembled in a conventional manner, the load-distributing means (strips 5) is compressed and deformed between the radially inner end faces 6 and 7 of the two pipes. It should here be noted that a sealing ring is arranged in a conventional manner between the two concrete pipes 2 and 4. However, no such sealing ring is shown in the drawings.

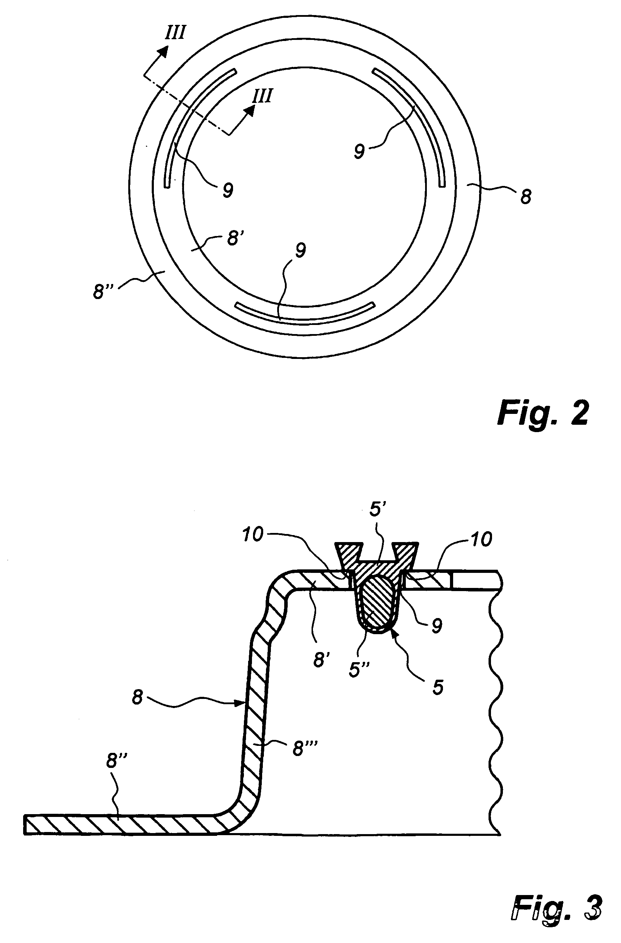

When manufacturing the concrete pipe 2 according to Fig. 1 provided with load-distributing strips 5, a mould is used, which comprises a bottom ring 8. Such a bottom ring 8 is shown in Figs 2 and 3, the bottom ring 8 in Fig. 3 being shown with a rubber strip 5 arranged therein. The bottom ring 8 is circular and has a horizontal inner annular part 8' and a horizontal outer annular part 8", which are connected to each other by means of a vertical annular frame part 8"'. Three circular-arc-shaped slots 9, which each in the shown example have an extent of about 60°, are formed in the inner annular part 8' and are uniformly distributed in the circumferential direction of the bottom ring 8.

When manufacturing the concrete pipe 2, a rubber strip 5 is placed in each slot 9. As shown in Fig. 3, the strip 5 has between its first portion 5' and second portion 5" on each side a shoulder portion 10, by means of which the strip 5 is suspended in such a manner from the bottom ring 8 in the slot 9 that its first portion 5' is located above the inner annular part 8' of the bottom ring 8 and therefore will be embedded in the concrete pipe 2. As will be appreciated, casting occurs by the mould, in which the bottom ring 8 is included, being filled from above with concrete.

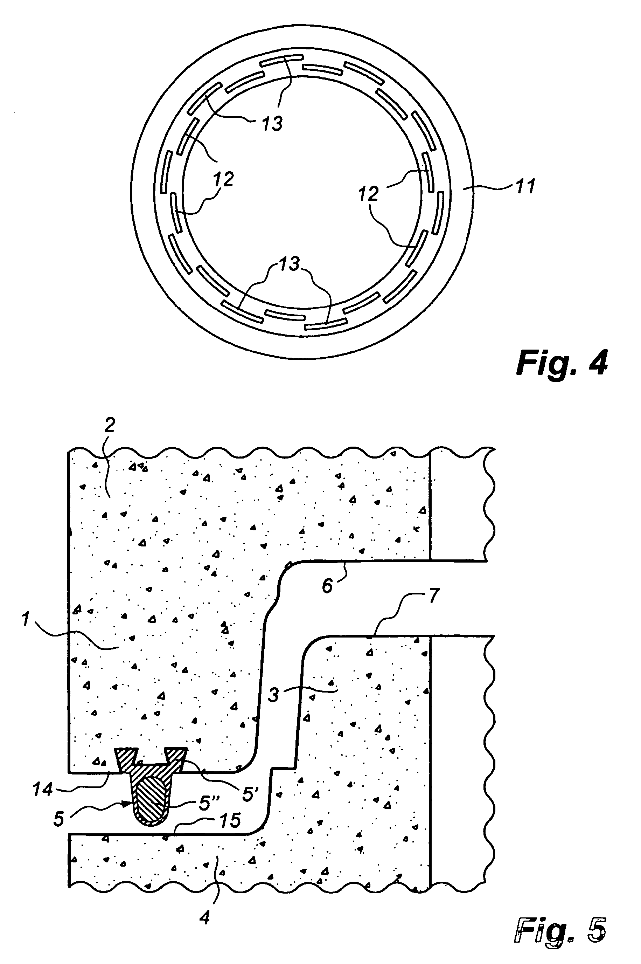

Fig. 4 shows an alternative bottom ring 11. The bottom ring 11 differs from the bottom ring 8 according to Fig. 2, in which the three slots 9 are located on a common circle, by the number of slots 12, 13 being considerably larger, the slots 12, 13 being significantly shorter than the slots 9, half of the slots (slots 12) being located on an inner circle, and half of the slots (slots 13) being located on an outer circle. As is evident from Fig. 4, the slots 12 and 13 on the two circles are slightly offset relative to each other in the circumferential direction.

Fig. 5 shows the concrete pipe 2 with the load-distributing means consisting of the three strips 5 arranged so that the first portion 5' of each strip 5 is embedded in the concrete pipe 2 and the second portion 5" thereof projects essentially axially from the radially outer end face 14 of the concrete pipe 2 to be pressed against the radially outer end face 15 of the concrete pipe 4.

The bottom ring 16 shown in Figs 6 and 7 differs from the bottom ring 8 shown in Figs 2 and 3 only by the slots 9 being formed in the outer annular part 8" of the bottom ring 16, not in the inner annular part 8" thereof, and the bottom ring 16 having an annular flange 17 which projects from the underside of the outer annular part 8" and by means of which the bottom ring 16 can be placed on a base in such a manner that the outer annular part 8" is held at a sufficient distance from the base to make room for the projecting second portion 5" of the rubber strip 5.

As shown in Figs 3 and 7, the rubber strip 5 has at the level of the slot 9 a slightly smaller width than the slot. This, together with the tapering shape of the strip 5, makes it easier in stripping to remove the bottom ring 8 and 16 respectively, without damaging the strip 5.

## Claims

1. A rubber strip (5), which, in manufacture of a concrete pipe (2) provided with an end face (6, 14), is adapted to be partially embedded in the concrete pipe (2) and has a first portion (5') which is adapted to be embedded in the concrete pipe (2) and a second portion (5") which is adapted to project essentially axially from the end face (6, 14) of the concrete pipe (2), **characterised in that** the first portion (5') is made of a vulcanised rubber material, and that the second portion (5") is made of an unvulcanised rubber material, which is externally enclosed by a layer of vulcanised rubber material.

2. A rubber strip as claimed in claim 1, in which the vulcanised rubber material of said first portion (5') and the vulcanised rubber material of said layer are the same rubber material.

3. A rubber strip as claimed in claim 2, in which the vulcanised rubber material has a hardness of 35-70 IRHD.

4. A rubber strip as claimed in any one of claims 1-3, which in its second portion (5") has a cross-section tapering away from the first portion (5').

5. A concrete pipe (2), which has an end face (6, 14) and is arranged to be assembled with another concrete pipe (4) provided with an end face (7, 15), end face to end face with an intermediate load-distributing means, which consists of at least one load-distributing strip (5) which has a first portion (5') embedded in the concrete pipe (2), and a second portion (5") projecting essentially axially from the end face (6, 14) of the concrete pipe, **characterised in that** the first portion (5'), embedded in the concrete pipe (2), of the load-distributing strip (5) is made of a vulcanised rubber material, and that its second portion (5") projecting from the end face (6, 14) of the concrete pipe (2) is made of an unvulcanised rubber material, which is externally enclosed by a layer of vulcanised rubber material.

6. A concrete pipe as claimed in claim 5, in which the vulcanised rubber material of said first portion (5') and the vulcanised rubber material of said layer are the same rubber material.

7. A concrete pipe as claimed in claim 6, in which the vulcanised rubber material has a hardness of 35-70 IRHD.

8. A concrete pipe as claimed in any one of claims 5-7, in which the load-distributing means consists of a plurality of load-distributing strips (5) distributed in the circumferential direction of the concrete pipe (2).

## Patentansprüche

1. Gummistreifen (5), der angepasst ist, bei Herstellung eines Betonrohres (2), das mit einer Endfläche (6,14) versehen ist, teilweise in das Betonrohr (2) eingebettet zu werden und der einen ersten Abschnitt (5'), der angepasst ist, in das Betonrohr (2) eingebettet zu werden, und einen zweiten Abschnitt (5"), der angepasst ist, im Wesentlichen axial von der Endfläche (6,14) des Betonrohrs (2) abzuragen, aufweist, **dadurch gekennzeichnet, dass** der erste Abschnitt (5') aus einem vulkanisierten Gummimaterial hergestellt ist und dass der zweite Abschnitt (5") aus einem unvulkanisierten Gummimaterial hergestellt ist, das außen von einer Schicht aus vulkanisiertem Gummimaterial eingeschlossen ist.

2. Gummistreifen wie in Anspruch 1 beansprucht, **dadurch gekennzeichnet, dass** das vulkanisierte Gummimaterial des ersten Abschnitts (5') und das vulkanisierte Gummimaterial der Schicht dasselbe Gummimaterial sind.

3. Gummistreifen wie in Anspruch 2 beansprucht, **dadurch gekennzeichnet, dass** das vulkanisierte Gummimaterial eine Härte von 35 bis 70 IRHD aufweist.

4. Gummistreifen wie in einem der Ansprüche 1 bis 3 beansprucht, **dadurch gekennzeichnet, dass** der zweite Abschnitt (5") einen Querschnitt aufweist, der sich von dem ersten Abschnitt (5') weg verjüngt.

5. Betonrohr (2), das eine Endfläche (6, 14) aufweist und das angeordnet ist, um mit einem weiteren Betonrohr (4), das eine Endfläche (7,15) aufweist, Endfläche auf Endfläche mit einer dazwischen liegenden Lastverteilungseinrichtung montiert zu werden, die aus wenigstens einem Lastverteilungsstreifen (5) besteht, der einen ersten Abschnitt (5'), der in das Betonrohr (2) eingebettet ist und einen zweiten Abschnitt (5"), der im wesentlichen axial von der Endfläche (6,14) des Betonrohrs abragt, aufweist, **dadurch gekennzeichnet, dass** der erste Abschnitt (5'), der in das Betonrohr (2) eingebettet ist, des Lastverteilungsstreifens (5) aus einem vulkanisierten Gummimaterial hergestellt ist, und dass sein zweiter Abschnitt (5"), der von der Endfläche (6, 14) des Betonrohrs (2) wegspringt, aus einem unvulkanisierten Gummimaterial hergestellt ist, das äußerlich von einer Schicht aus vulkanisiertem Gummimaterial eingeschlossen ist.

6. Betonrohr wie in Anspruch 5 beansprucht, **dadurch gekennzeichnet, dass** das vulkanisierte Gummimaterial des ersten Abschnitts (5') und das vulkanisierte Gummimaterial der Schicht dasselbe Gummimaterial sind.

7. Betonrohr wie in Anspruch 6 beansprucht, **dadurch gekennzeichnet, dass** das vulkanisierte Gummimaterial eine Härte von 35 bis 70 IRHD aufweist.

8. Betonrohr wie in einem der Ansprüche 5 bis 7 beansprucht, **dadurch gekennzeichnet, dass** die Lastverteilungseinrichtung aus einer Vielzahl von Lastverteilungsstreifen (5) besteht, die in Umfangsrichtung des Betonrohrs (2) angeordnet sind.

## Revendications

1. Bande de caoutchouc (5) conçue pour être partiellement intégrée, lors de la fabrication d'une conduite en béton (2) munie d'une face d'extrémité (6, 14), dans cette conduite en béton (2) et qui comprend une première portion (5'), conçue pour être intégrée dans la conduite en béton (2), et une seconde portion (5"), conçue pour dépasser essentiellement dans la direction axiale de la face d'extrémité (6, 14) de la conduite en béton (2), **caractérisée en ce que** la première portion (5') est constituée d'un matériau de type caoutchouc vulcanisé et **en ce que** la seconde portion (5") est constituée d'un matériau de type caoutchouc non vulcanisé qui est recouvert à l'extérieur d'une couche de matériau de type caoutchouc vulcanisé,

2. Bande de caoutchouc selon la revendication 1, dans laquelle le matériau de type caoutchouc vulcanisé de ladite première portion (5') et le matériau de type caoutchouc vulcanisé de ladite couche sont les mêmes matériaux de type caoutchouc.

3. Bande de caoutchouc selon la revendication 2, dans laquelle le matériau de type caoutchouc vulcanisé présente une dureté de 35-70 IRHD.

4. Bande de caoutchouc selon l'une des revendications 1 à 3, qui dans sa seconde portion (5") présente une section transversale qui se rétrécit à partir de la première portion (5'),

5. Conduite en béton (2) qui comprend une face d'extrémité (6, 14) et qui est conçue de façon à être assemblée avec une autre conduite en béton (4) munie d'une face d'extrémité (7, 15), face d'extrémité contre face d'extrémité, avec un moyen intermédiaire de répartition de la charge constitué d'au moins une bande de répartition de la charge (5) qui comprend une première portion (5'), intégrée dans la conduite en béton (2), et une seconde portion (5") dépassant essentiellement dans la direction axiale de la face d'extrémité (6, 14) de la conduite en béton, **caractérisé en ce que** la première portion (5'), intégrée dans la conduite en béton (2), de la bande de répartition de la charge (5) est constituée d'un matériau de type caoutchouc vulcanisé et **en ce que** sa seconde portion (5"), dépassant de la face d'extrémité (6, 14) de la conduite en béton (2) est constituée d'un matériau de type caoutchouc non vulcanisé qui est recouvert à l'extérieur d'une couche de matériau de type caoutchouc vulcanisé.

6. Conduite en béton selon la revendication 5, dans laquelle le matériau de type caoutchouc vulcanisé de ladite première portion (5') et le matériau de type caoutchouc vulcanisé de ladite couche sont les mêmes matériaux de type caoutchouc,

7. Conduite en béton selon la revendication 6, dans laquelle le matériau de type caoutchouc vulcanisé présente une dureté de 35-70 IRHD,

8. Conduite en béton selon l'une des revendications 5 à 7, dans laquelle le moyen de répartition de la charge est constitué d'une pluralité de bandes de répartition de la charge (5) réparties dans la direction circonférentielle de la conduite en béton (2).
